# EUROPEAN PATENT SPECIFICATION

(11) **EP 3 459 764 B1**
(45) Date of publication and mention of the grant of the patent: **21.10.2020**
(21) Application number: 17799486.0
(22) Date of filing: 18.05.2017
(51) Int. Cl.: B60C 9/18, B60C 9/20

(54) **TIRE**
REIFEN
PNEUMATIQUE

(30) Priority: 20.05.2016 JP 2016101859
(43) Date of publication of application: 27.03.2019
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP)
(74) Representative: Oxley, Robin John George
(86) International application number: PCT/JP2017/018749
(87) International publication number: WO 2017/200062

(56) References cited:
- EP-A2- 0 093 451
- WO-A1-2012/161331
- JP-A- H0 872 506
- JP-A- H06 143 920
- JP-A- S58 209 603
- JP-A- S61 249 805
- JP-A- 2004 345 609
- JP-A- 2010 540 337
- JP-A- 2012 001 167
- JP-A- 2013 539 734

## Description

### Technical Field

The present disclosure relates to a tire in which a belt is disposed at an outer side in a tire radial direction of a carcass.

### Background Art

A structure provided with two or more sheets of diagonal belt ply that are formed so as to contain cords that are diagonally inclined relative to a tire circumferential direction on an outer side in a tire radial direction of a carcass, and a belt layer that is formed by a plurality of layers provided with a reinforcing layer and the like that are disposed at the outer side in the tire radial direction of the diagonal belt ply is typically used for a pneumatic tire that is fitted onto a vehicle (see, for example, Japanese Patent Application Laid-Open (JP-A) Nos. 2013-244930, 2013-220741). Attention is also drawn to the disclosure of EP 0 093 451.

### SUMMARY OF THE INVENTION

### Technical Problem

In recent years, there is an increasing need for a reduction in weight and the like of a pneumatic tire, and a pneumatic tire capable of responding to this need is strongly desired.

The present disclosure was conceived in view of the above-described circumstances, and it is an object thereof to provide a tire that achieves a reduction in weight while simultaneously enabling steering stability to be maintained.

### Solution to the Problem

A tire having a carcass that is formed so as to include at least one sheet of carcass ply that extends from one bead portion to another bead portion; a belt that is disposed at a tire radial direction outer side of the carcass, and that is formed by a single sheet of belt ply in which plural cords that are disposed with an inclination of not more than 10° relative to a tire circumferential direction and extend around an entire tire circumference in the tire circumferential direction are coated with a rubber coating having a tensile modulus of elasticity (as stipulated in JIS K7113: 1995) in excess of 50 MPa, one end portion in a longitudinal direction of all of the cords of the belt ply being positioned at one end side in a width direction of the belt ply, and another end portion in the longitudinal direction of the cords of the belt ply being positioned at another end side in the width direction of the belt ply; and a tread that is disposed at a tire radial direction outer side of the belt.

### Advantageous Effects of the Invention

As is described above, according to the tire of the present disclosure, it is possible to provide a tire that achieves a reduction in weight while simultaneously enabling steering stability to be maintained.

### BRIEF DESCRIPTION OF THE DRAWINGS

FIG. 1 is a cross-sectional view across a tire axis of rotation showing a pneumatic tire according to an exemplary embodiment of the present disclosure.
FIG. 2A is plan view showing a belt ply.
FIG. 2B is cross-sectional view (i.e., a cross-sectional view across a line 2(B) - 2(B) in FIG. 2A) showing a belt ply.

### DESCRIPTION OF THE EMBODIMENTS

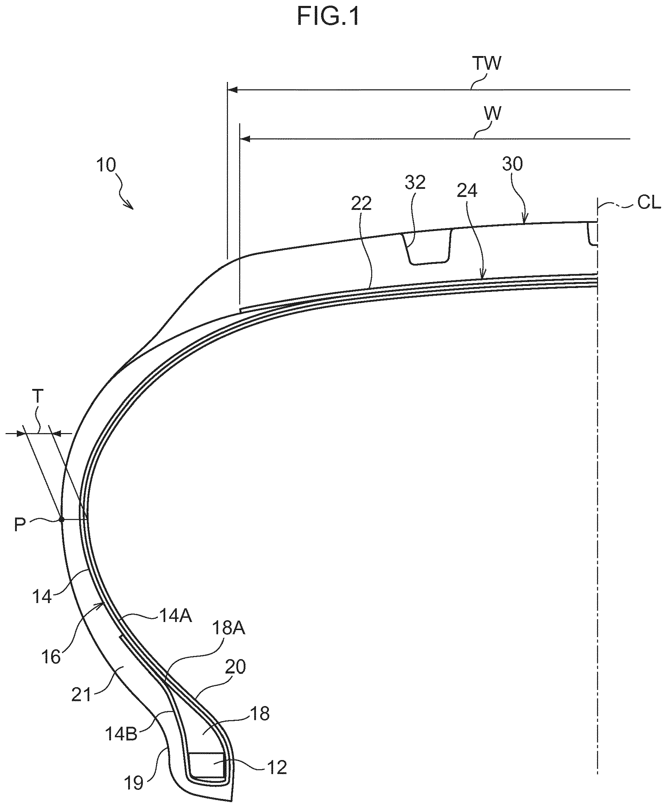

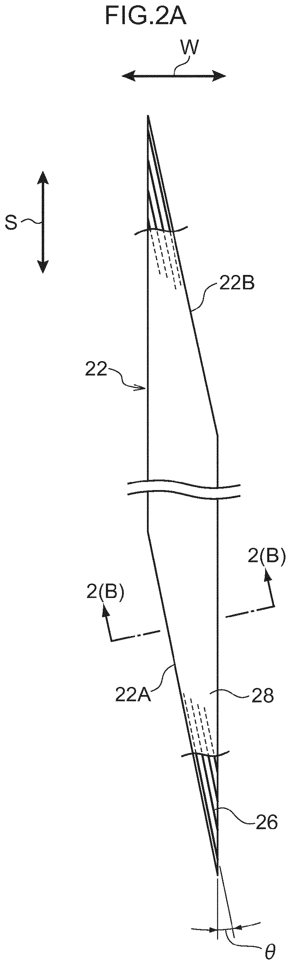

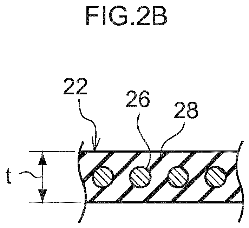

A pneumatic tire 10 according to an exemplary embodiment of the present disclosure will now be described using FIG. 1 and FIG. 2.

As is shown in FIG. 1, the pneumatic tire 10 of the present exemplary embodiment is what is known as a radial tire that is used in a passenger vehicle, and is provided with a pair of bead cores 12. A carcass 16 that is formed by a single sheet of carcass ply 14 extends between one bead core 12 and the other bead core 12. Note that FIG. 1 shows a shape of the pneumatic tire 10 in a natural state before it is filled with air.

The carcass ply 14 is formed by coating a plurality of cords that extend in a radial direction of the pneumatic tire 10 with a rubber coating. In other words, the pneumatic tire 10 of the present exemplary embodiment is what is known as a radial tire.

The material used for the cords of the carcass ply 14 is, for example, PET, however, it is also possible for another known conventional material to be used.

Each end portion in the tire width direction of the carcass ply 14 is folded back over towards the outer side in the tire radial direction around a bead core 12. A portion of the carcass ply 14 that extends from one bead core 12 to the other bead core 12 is called a main body portion 14A, while a portion thereof that is folded back around the bead core 12 is called a fold-back portion 14B.

A bead filler 18 whose thickness becomes gradually narrower approaching the outer side in the tire radial direction from each bead core 12 is disposed between the main body portion 14A and the fold-back portion 14B of the carcass ply 14.

Note that, in the pneumatic tire 10, a portion on an inner side in the tire radial direction from an outer side end 18A in the tire radial direction of the bead filler 18 forms a bead portion 19.

An inner liner 20 that is formed from rubber is disposed at the tire inner side of the carcass 16, and a side rubber layer 21 that is formed from rubber is disposed at the outer side in the tire width direction of the carcass 16.

A belt 24 that is formed from a single sheet of belt ply 22 is provided on the outer side in the tire radial direction of the carcass 16.

FIG. 2A is a plan view of an unvulcanized belt ply 22 prior to it being affixed to the carcass 16. The unvulcanized belt ply 22 is diagonally inclined unidirectionally at a fixed angle θ relative to the ply longitudinal direction (i.e., to a direction shown by an arrow S in FIG. 2A: equivalent to the tire circumferential direction), and has a plurality of cords 26 that are arrayed adjacently to each other so as not to overlap each other, and at a uniform spacing from each other in the ply longitudinal direction.

As is shown in FIG. 2A and FIG. 2B, in the present exemplary embodiment, the plurality of cords 26 are coated with a rubber coating 28.

One longitudinal direction end portion 22A and another longitudinal direction end portion 22B of the unvulcanized belt ply 22 are parallel with the cords 26 that are diagonally inclined relative to the longitudinal direction, so that the unvulcanized belt ply 22 presents a parallelogram shape when looked at in a plan view.

The unvulcanized belt ply 22 is formed, for example, by firstly forming a belt-shaped member by coating the plurality of cords 26, which have been lined up in parallel with each other, with the rubber coating 28, and then cutting this belt-shaped member in parallel with the cords 26, in other words, in a diagonally inclined direction relative to the longitudinal direction.

In the pneumatic tire 10 manufacturing process, the unvulcanized belt ply 22 shown in FIG. 2A is wound around a crown portion, which is an outer circumferential portion of the carcass 16 which is formed in a toroidal shape on the outer circumference of a tire molding drum (not shown in the drawings), and the one longitudinal direction end portion 22A and the other longitudinal direction end portion 22B, which are the ends that have been cut in parallel with the cords 26 of the belt-shaped member, are then abutted together and joined.

As a result, in the belt ply 22 of the pneumatic tire 10, the plurality of cords 26 are all diagonally inclined in the same direction relative to the tire circumferential direction (i.e., to the direction indicated by the arrow S), and extend completely around one circumference of the tire in the tire circumferential direction at a uniform spacing from each other as so as not to overlap each other in the tire radial direction. Moreover, in all of the cords 26, one end portion (i.e., a cut end) of the cords 26 is positioned at an edge portion on one side in the width direction of the belt ply 22, while another end portion (i.e., a cut end) of the cords 26 is positioned at an edge portion on the other side in the width direction of the belt ply 22. Note that, in the vulcanized pneumatic tire 10, join portions of the one longitudinal direction end portion 22A and the other longitudinal direction end portion 22B are joined together into a single integral unit such that a boundary face between the rubber coating 28 of the one longitudinal direction end portion 22A and the rubber coating 28 of the other longitudinal direction end portion 22B is not visible.

Note that, as is shown in FIG. 1, in the pneumatic tire 10 in its natural state before it is filled with air, the crown portion, which is the outer circumferential portion in the tire radial direction of the carcass 16, has a substantially circular arc-shaped configuration which protrudes towards the outer side in the tire radial direction, and, in the same way, the belt ply 22 also has a substantially circular arc-shaped configuration which protrudes towards the outer side in the tire radial direction.

The cords 26 of the belt ply 22 of the present exemplary embodiment are steel cords, however, in some cases it is also possible for organic fiber cords to be used.

The cords 26 used for the belt ply 22 are thicker, and also have greater strength than the cords of the carcass ply 14.

The cords 26 of the belt ply 22 are formed, for example, by "1x5" steel cords, and the diameter of each steel wire is 0.225 mm, however, another known conventional structure may also be used.

It is preferable that the number of cords 26 embedded per unit width in the belt ply 22 be within a range of from 10 to 20 cords per inch.

It is necessary that the inclination angle θ of the cords 26 relative to the longitudinal direction of the belt ply 22 (i.e., the tire circumferential direction) be not more than 10°, and within a range of from 3° to 8° is preferable.

In the belt ply 22 of the present exemplary embodiment, it is necessary that the tensile modulus of elasticity (as stipulated in JIS K7113: 1995) of the rubber coating 28 be not less than 50 MPa. It is also preferable that the upper limit of the tensile modulus of elasticity of the rubber coating 28 be not more than 1000 MPa. A range of from 200 to 500 MPa for the tensile modulus of elasticity of the rubber coating 28 is particularly preferable.

As is shown in FIG. 1 and FIG. 2B, a thickness t of the belt ply 22 of the present exemplary embodiment is uniform, and it is preferable that the thickness t of the belt ply 22 be set within a range of from 10% to 50% of a thickness T of a tire maximum width portion P of the pneumatic tire 10. If the pneumatic tire 10 is for a passenger vehicle, then the actual thickness t of the belt ply 22 (i.e., the thickness of the rubber coating 28) is preferably within a range of from 0.5 to 5.0 mm.

A tread 30 that is formed from rubber is disposed at the outer side in the tire radial direction of the aforementioned belt 24. Drainage grooves 32 are formed in the tread 30. A conventional, commonly-used rubber is used for the tread 30. Additionally, a conventional, commonly-used tread pattern is used for the tread 30.

A width W of the belt ply 22 is preferably within a range of from 60% to 100% relative to a ground contact width TW of the tread 30, and a range of from 70% to 95% is particularly preferable.

Here, the ground contact width TW of the tread 30 is measured when the pneumatic tire 10 is fitted onto a standard rim as stipulated in the JATMA YEAR BOOK (Japan Automobile Tyre Manufacturers Association, Inc., 2016 edition), and is filled to an internal pressure of 100% of the air pressure (i.e., to the maximum air pressure) that corresponds to the maximum load capability at the applicable size/ply rating as per the JATMA YEAR BOOK (i.e., the load depicted in bold type in the Internal Pressure - Corresponding Load Capability Table), and when the pneumatic tire 10 is disposed in a stationary state such that the axis of rotation thereof is parallel to a horizontal flat surface, and when a mass that corresponds to this maximum load capability is applied. Note that, at the place of use or at the place of manufacture, if TRA Standards or ETRTO Standards are being applied, then the tire conforms to the relevant Standards.

### (Action and Effect)

An action and effect of the pneumatic tire 10 of the present exemplary embodiment will now be described.

In the pneumatic tire 10 of the present exemplary embodiment, because the belt 24 that reinforces the crown portion, which is the portion on the outer side in the tire radial direction of the carcass 16, is formed by the single sheet of belt ply 22, the pneumatic tire 10 of the present exemplary embodiment is lighter in weight compared to a belt of a conventional tire that is formed by two or more sheets of belt ply, and the manufacturing thereof is also simpler.

Because the tensile modulus of elasticity of the rubber coating 28 covering the cords 26 in the belt ply 22 of the present exemplary embodiment is not less than 50 MPa, even if only one sheet of the belt ply 22 is used to form the belt 24, it is still possible to secure sufficient in-plane shear rigidity in the belt 24.

By securing sufficient in-plane shear rigidity in the belt 24, sufficient lateral force is generated when a slip angle is imparted to the pneumatic tire 10, so that steering stability can be guaranteed.

In the pneumatic tire 10 of the present exemplary embodiment, because the belt 24 is formed by the single sheet of belt ply 22, the thickness of the belt 24 can be made thinner compared to a conventional belt that is formed by two or more sheets of belt ply, and the thickness of the tread 30 can be made thicker by a corresponding amount, so that the depth of the grooves 32 can also be made deeper. As a result of this, increasing the lifespan of the pneumatic tire 10 is also possible.

In the belt ply 22 of the pneumatic tire 10, because the cords 26 are formed on the tire circumference such that no part thereof overlaps in the tire radial direction, so that the belt ply 22 has a uniform thickness in the tire circumferential direction, the pneumatic tire 10 has superior uniformity.

Because the belt ply 22 of the present exemplary embodiment has a typical ply structure in which the plurality of cords 26 that are arrayed adjacently to each other at a uniform spacing as so as not to overlap each other are coated with the rubber coating 28, compared with a spiral belt which is formed by winding one or a plurality of cords in a spiral configuration, preparing the components and molding the tire can be performed extremely efficiently.

In the pneumatic tire 10 of the present exemplary embodiment, because the inclination angle θ of the cords 26 of the belt ply 22 is not more than 10°, and because the strength of each single cord 26 is a range of from 600 to 1500 N, and because the number of cords 26 embedded per unit width is a range of from 10 to 15 cords per inch, even if there is only a single sheet of the belt ply 22, it is still possible to secure sufficient tensile rigidity in the circumferential direction in order to obtain a hoop effect in the belt 24.

Note that, by setting the inclination angle θ of the cords 26 to not more than 8°, it is possible to improve the tensile rigidity in the circumferential direction in order to obtain a hoop effect in the belt 24. On the other hand, if the inclination angle θ of the cords 26 is less than 3°, then because the bending rigidity in the tire circumferential direction of the belt 24 increases, the ability of the tire to yield when traveling over a projection is reduced, and the ride comfort deteriorates. Furthermore, the unvulcanized belt ply 22, which is formed in a parallelogram shape prior to being affixed to the carcass 16, would become too narrow and elongated, and this would make winding it around the carcass 16 difficult. Additionally, cutting the cords 26 during the manufacturing of the belt ply 22 would also be difficult.

Note that, if the tensile modulus of elasticity of the rubber coating 28 of the belt ply 22 is too high, then the rubber coating 28 becomes too hard and there is a concern that cracks will be generated in the rubber coating 28 due to traveling impact or as a result of the tire traveling over bumps in the road. Because of this, it is preferable that the upper limit value of the tensile modulus of elasticity of the rubber coating 28 be not more than 1000 MPa.

If the thickness of the rubber coating 28 of the belt ply 22 is taken as t, and the overall thickness of the tire maximum width portion P is taken as T, then it is preferable that 0.015 < t/T < 0.400, and more preferable that 0.15 < t/T < 0.25. Note that if t/T is 0.015 or less, then the in-plane shear rigidity of the belt 24 is insufficient. If, on the other hand, t/T is 0.400 or more, then the weight of the belt ply 22 increases, and it becomes difficult to reduce the weight of the pneumatic tire 10.

Furthermore, if the width W of the belt ply 22 is less than 60% of the ground contact width TW of the tread 30, then the hoop effect of the belt 24 becomes insufficient. If, on the other hand, the width W of the belt ply 22 exceeds 100% of the ground contact width TW of the tread 30, then there is a plateau in the hoop effect, and the quantity of belt ply 22 becomes greater than what is required, which results in an increase in the weight of the pneumatic tire 10.

### [Additional Exemplary Embodiments]

An exemplary embodiment of the present disclosure has been described above, however, it should be understood that the present disclosure is not limited to this exemplary embodiment and various modifications and the like are possible insofar as they do not depart from the spirit or scope of the present disclosure.

In the pneumatic tire 10 of the above-described exemplary embodiment, the cords 26 of the belt ply 22 are coated with the rubber coating 28.

Note that, although not shown in the drawings, in some cases it is also possible for a belt-shaped layer that is formed so as to contain organic fibers or the like to be provided so as to cover end portions of the belt ply 22. However, from the standpoint of weight reduction, it is preferable that this layer is not provided in such a way as to straddle the tire equatorial plane CL and cover the entire belt ply 22.

Moreover, in some case, it is also possible for two or more layers of the carcass ply 14 to be provided.

### (Test Examples)

A plurality of tires in which the tensile modulus of elasticity of the rubber coating of each belt ply was different from the others were prepared, and a cornering power (CP) comparison test was performed. The tires 1 to 5 used in the test had the same structure as the pneumatic tire of the above-described exemplary embodiment (see FIG. 1), and the tensile modulus of elasticity of the rubber coatings was altered in a variety of ways. Additionally, for reference, the same test was performed on a tire having a conventional structure which was provided with two sheets of belt ply.
(1) The specifications of tires 1 to 8 were as follows.
   Tire size: 225/40R18
(2) Cornering power testing method

The tires were loaded onto a drum tester, and values when the lateral force when the slip angle was 0° was subtracted from the lateral force when the slip angle was 1° were calculated. The calculated values were then displayed as an index with the tire having a conventional structure set as 100. The table shows that the greater the numerical value of the index, the better the cornering power.

**[Table 1]**

| | | Conventional Structure Tire | Tire 1 | Tire 2 | Tire 3 | Tire 4 | Tire 5 |
|---|---|---|---|---|---|---|---|
| Tensile Modulus of Elasticity (MPa) of Rubber Coating | | 5 | 250 | 500 | 100 | 50 | 10 |

| Internal Pressure (kPa) | Load (kN) | CP (INDEX) | | | | | |
|---|---|---|---|---|---|---|---|
| 220 | 3 | 100 | 141 | | | | |
| | 4 | 100 | 152 | | | | |
| | 5 | 100 | 135 | | | | |
| 250 | 3 | 100 | 138 | | | | |
| | 4 | 100 | 137 | 153 | 118 | 100 | 81 |
| | 5 | 100 | 133 | | | | |
| 290 | 3 | 100 | 138 | | | | |
| | 4 | 100 | 134 | | | | |
| | 5 | 100 | 131 | | | | |

From the test results it can be seen that when the tensile modulus of the rubber coating was 50 MPa or more, then an equivalent or better cornering power as that obtained from a tire having a conventional structure was obtained.

Moreover, the tires having just one sheet of belt ply were 11% lighter in weight than the tire having a conventional structure which was provided with two sheets of belt ply.

Priority is claimed on Japanese Patent Application No. 2016-101859, filed May 20, 2016.

## Claims

1. A tire (10) comprising:
a carcass (16) that is formed so as to include at least one sheet of carcass ply (14) that extends from one bead portion to another bead portion;
a belt (24) that is disposed at a tire radial direction outer side of the carcass (16), and that is formed by a single sheet of belt ply (22) in which a plurality of cords (26) that are disposed with an inclination of not more than 10° relative to a tire circumferential direction and extend around an entire tire circumference in the tire circumferential direction are coated with a rubber coating (28) having a tensile modulus of elasticity, as stipulated in JIS K7113: 1995, in excess of 50 MPa, one end portion (22A) in a longitudinal direction of all of the cords of the belt ply (22) being positioned at one end side in a width direction of the belt ply (22), and another end portion (22B) in the longitudinal direction of the cords of the belt ply (22) being positioned at another end side in the width direction of the belt ply (22); and
a tread (30) that is disposed at a tire radial direction outer side of the belt (24).

2. The tire (10) according to claim 1, wherein a thickness of the belt ply (22) is within a range of from 10% to 50% of a thickness of a tire maximum width portion.

3. The tire (10) according to claim 2, wherein an inclination angle of the cords (26) relative to the tire circumferential direction is within a range of from 3° to 8°.

4. The tire (10) according to any one of claims 1 to 3, wherein the tensile modulus of elasticity of the rubber coating (28) is not more than 1000 MPa.

## Patentansprüche

1. Reifen (10) umfassend :
eine Karkasse (16), die derart geformt ist, dass sie mindestens eine Schicht Karkassenlage (14) einschließt, die sich von einem Wulstteil zu einem anderen Wulsteil erstreckt;
einen Gürtel (24) der an einer Reifenradialrichtungsaußenseite der Karkasse (16) angeordnet ist, und der durch eine einzelne Schicht Gürtellage (22) gebildet wird, in der eine Vielzahl von Kords (26), die mit einer Neigung von nicht mehr als 10° relativ zu einer Reifenumfangsrichtung angeordnet sind und sich um einen gesamten Reifenumfang in Reifenumfangsrichtung erstrecken, mit einer Gummibeschichtung (28) beschichtet sind, die ein Zugelastizitätsmodul, gemäß JIS K7113:1995, von mehr als 50 Mpa aufweist, wobei ein Endabschnitt (22A) in einer Längsrichtung aller Kords der Gürtellage (22) an einer Endseite in einer Breitenrichtung der Gürtelschicht (22) positioniert ist und ein anderer Endabschnitt (22B) in Längsrichtung der Kords der Gürtellage (22) an einer anderen Endseite in Breitenrichtung der Gürtellage (22) positioniert ist; und
eine Lauffläche (30), die an einer Reifenradialrichtungsaußenseite des Gürtels (24) angeordnet ist.

2. Reifen (10) nach Anspruch 1, wobei eine Dicke der Gürtellage (22) in einem Bereich von 10% bis 50% einer Dicke eines maximalen Breitenabschnitts des Reifens liegt.

3. Reifen (10) nach Anspruch 2, wobei ein Neigungswinkel der Kords (26) relativ zur Reifenumfangsrichtung in einem Bereich von 3° bis 8° liegt.

4. Reifen (10) nach einem der Ansprüche 1 bis 3, wobei das Zugelastizitätsmodul der Gummibeschichtung (28) nicht mehr als 1000 MPa beträgt.

## Revendications

1. Bandage pneumatique (10) comprenant:
une carcasse (16) qui est formée de manière à inclure au moins une feuille de nappe de carcasse (14) qui s'étend d'une partie de talon à une autre partie de talon;
une ceinture (24) qui est disposée sur un côté extérieur de direction radiale du bandage pneumatique de la carcasse (16), et qui est formée par une seule feuille de nappe de ceinture (22) dans laquelle une pluralité de cordons (26) disposés avec une inclinaison ne dépassant pas 10° par rapport à une direction circonférentielle du bandage pneumatique et s'étendant sur toute une circonférence du bandage pneumatique dans la direction circonférentielle du bandage pneumatique sont revêtus d'un revêtement en caoutchouc (28) ayant un module d'élasticité à la traction, comme stipulé dans JIS K7113:1995, au-delà de 50 MPa, une partie d'extrémité (22A) dans une direction longitudinale de tous les fils de la nappe de ceinture (22) étant positionnée sur un côté d'extrémité dans une direction de largeur de la nappe de ceinture (22), et une autre partie d'extrémité (22B) dans la direction longitudinale des cordons de la nappe de ceinture (22) étant positionnée sur un autre côté d'extrémité dans la direction de la largeur de la nappe de ceinture (22); et
une bande de roulement (30) qui est disposée sur un côté extérieur de direction radiale de la courroie (24).

2. Bandage pneumatique (10) selon la revendication 1, dans lequel une épaisseur de la nappe de ceinture (22) est dans une plage de 10% à 50% d'une épaisseur d'une portion à largeur maximale du bandage pneumatique.

3. Bandage pneumatique (10) selon la revendication 2, dans lequel un angle d'inclinaison des câbles (26) par rapport à la direction circonférentielle du bandage pneumatique est dans une plage de 3° à 8°.

4. Bandage pneumatique (10) selon l'une quelconque des revendications 1 à 3, dans lequel le module d'élasticité en traction du revêtement en caoutchouc (28) n'est pas supérieur à 1000 MPa.
